# EUROPEAN PATENT SPECIFICATION

(11) **EP 3 494 293 B1**
(45) Date of publication and mention of the grant of the patent: **15.04.2020**
(21) Application number: 17751607.7
(22) Date of filing: 03.08.2017
(51) Int. Cl.: F01M 1/08, F01M 11/10, F01M 11/02

(54) **SAFETY SYSTEM FOR LUBRICATION OF THE CYLINDER OF A LARGE SLOW-RUNNING INTERNAL COMBUSTION ENGINE AND A LARGE SLOW-RUNNING TWO-STROKE INTERNAL COMBUSTION ENGINE**
SICHERHEITSSYSTEM ZUR SCHMIERUNG DES ZYLINDERS EINES GROSSEN LANGSAM LAUFENDEN VERBRENNUNGSMOTORS UND EINES GROSSEN LANGSAM LAUFENDEN ZWEITAKTVERBRENNUNGSMOTORS
SYSTÈME DE SÉCURITÉ POUR LA LUBRIFICATION DU CYLINDRE D'UN GRAND MOTEUR À COMBUSTION INTERNE À MARCHE RALENTI ET D'UN GRAND MOTEUR À COMBUSTION INTERNE À DEUX TEMPS À MARCHE RALENTI

(30) Priority: 05.08.2016 DK 201670585
(43) Date of publication of application: 12.06.2019
(73) Proprietor: Hans Jensen Lubricators A/S, 9560 Hadsund (DK)
(72) Inventor: KRISTENSEN, Nikolaj, 9000 Aalborg (DK)
(74) Representative: Nielsen, Leif
(86) International application number: PCT/DK2017/050258
(87) International publication number: WO 2018/024308

(56) References cited:
- WO-A1-2011/150943
- JP-A- S55 139 912
- US-A- 3 207 026

## Description

### FIELD OF THE INVENTION

The present invention relates to hydraulic systems with overpressure safety control using overpressure relief valves. In particular it relates to an apparatus with such a system and with a plurality of hydraulic load units. It also relates to overpressure safety control for oil lubrication valves in a large slow-running two-stroke engine.

### BACKGROUND OF THE INVENTION

In order to protect components in hydraulic systems, safety pressure relief valves are typically employed in order to protect the system against damage caused by pressure above an acceptable level. A specific example in relation to nozzles for oil jets in internal combustion engines is disclosed in US patent number US8256388. In this case, a pressure relief valve is adapted to send oil back to a sump in case of oil pressure being higher than a predetermined level.

Also known are pressure relief valves for hydraulic pumps delivering oil to a number of lubrication oil injectors. For oil injectors using non-return valves, the overpressure problem is not severe, as such valves function by themselves as overpressure relief valves due to the opening of the valves at high pressure.

European patent application EP1586751 by Murato et al. assigned to Mitsubishi discloses a cylinder lubrication system in which a cut-off valves is provided for each injector and used for shutting of an injector in case of malfunctioning.

For a special type of valves, commercially called SIP valves for the Swirl Injection Principle, there is a general necessity for pressure control and a pressure relief mechanism that prevents damage to the system. SIP valve oil injection systems are described in International patent applications WO02/35068, WO2004/038189, WO2005/124112, WO2012/126480, WO2014/048438, WO2011/150943, and WO2012/126473, all by Hans Jensen Lubricators A/S. The Swirl Injection Principle (SIP) is based on injection of an atomized spray of lubricant into the scavenging air swirl inside the cylinder. The swirl results in the lubricant being pressed outwards against the cylinder wall as a thin and even layer. The valves comprise an injector housing inside which a reciprocating valve member is provided, typically a valve needle. The valve member, for example with a needle tip, closes and opens access to a nozzle aperture according to a precise timing. Whereas traditional lubricant injectors based on non-return valve principles are relatively robust against overpressure, as they tend to release lubricant pressure into the cylinder, this is not necessarily so for SIP valves due to a different working principle. Also, SIP valves work at higher pressure, for example at a pressure of 35-40 bar (1 bar = 100 kPa) in order to provide a quick response.

Accordingly, for SIP valves, there is a crucial need for an overpressure safety mechanism in order to prevent damage to the system in case that one of the SIP valves is malfunctioning. In current SIP lubrication systems, the SIP injectors are protected against overpressure by safety non-return valves that open for drain of high pressure lubricant in case that a SIP valve is blocked for ejection of lubricant and the pressure of the lubricant in the supply pipe exceeds a predetermined pressure limit above the normal working pressure for SIP valves. In order to control that a SIP valve or a plurality of SIP valves is malfunctioning, an indicator sensor is used. This indicator sensor comprises a metal member that is displaced by the flow of drain lubricant from any of the safety overpressure valves. If an overpressure valve opens for release of lubricant at a pressure in excess of the predetermined pressure limit, it drains into a drain line and flows around the metal member, causing displacement thereof from an idle position into an indicator position. The displacement of the metal member is registered by a magnet sensor and in case of registration results in an alarm that indicates the need for repair. However, this type of sensor requires relatively large installation efforts, especially due to necessity of on-site precision adjustment, which is disadvantageous.

Supply of lubrication for SIP valves is achieved in the prior art with compact pump units, for example as disclosed in WO2009/015666 and WO2015/144182. In commercialized prior art systems, for example marketed under the name of Lubtronic, the overpressure safety mechanism is part of the pumping unit, which prevents combinations with other pump systems, preventing flexibility with respect to changing lubrication pump.

Accordingly, it would be desirable to have a system that is more flexible and easier to install with less adjustment efforts. As overpressure control is an important aspect of the SIP systems, there is a steady desire for improvement with respect to functionality. Especially, there is a need for an improved system and method for overpressure safety control in oil injection systems for lubrication of large slow-running two-stroke engines, for example diesel engines.

### DESCRIPTION / SUMMARY OF THE INVENTION

It is therefore the objective of the invention to provide an improvement in the art. It is in particular an objective to improve overpressure safety control mechanisms for oil lubrication systems in internal combustion engines, especially large slow-running two-stroke engines, where the overpressure safety control mechanism has low production costs and ease of installation and operation. A further objective a lubrication system with safety control mechanism that is reliable and stable in operation and advantageously more precise that the prior art. A further objective is a more flexible system. This is achieved with a system for lubrication of the cylinder of a large slow-running internal combustion engine, as described in more detail in the following, in which a plurality of lubricant injectors are used for injection of lubricant into the cylinder, and where an overpressure safety control mechanism is provided for preventing damage to the system. Such engines are used in power plants and ships. An example is a large slow-running two-stroke engine, optionally marine or stationary engine. Examples are engines using diesel or liquefied natural gas (LNG) fuel.

In a concrete embodiment of the lubrication system, each one of the lubricant injectors is connected via one of a corresponding plurality of lubricant supply lines to a lubricant pump unit. At least part of the lubricant supply lines are pipes, such that the lubricant injectors have a pipe connection to the pump unit for supply of lubricant. Typically, the pump unit has a pressure-safe housing, and the lubricant supply lines are flow-connected to such housing by mounting of a pipe end-part of the lubricant supply lines to the housing, for example, to a manifold that is part of the pump unit and provided in or on the housing.

The injectors have an injection pressure level at which the injectors are activated for ejecting lubricant. For example, the pressure is higher than 10 bars (1 bar = 100 kPa), which is about a factor of two higher than in traditional non-return valve injectors. For SIP injectors, which are configured for Swirl Injection Principle into an engine cylinder with ejection of a mist of oil, this pressure is typically above 10 bars, for example in the range of 30-40 bars or even above, such as around 60 bars. SIP valve oil injection systems are described in WO02/35068, WO2004/038189, WO2005/124112, WO2012/126480, WO2014/048438, and WO2012/126473 and are therefore not explained herein in detail, as the references imply multiple examples therefore.

Each of the plurality of lubricant supply lines is connected to an upstream side of one of a corresponding plurality of overpressure relief valves for opening the overpressure relief valve when the pressure in the corresponding lubricant supply line exceeds a predetermined overpressure relief level, which is above the injection pressure level. Optionally, the overpressure relief level of each overpressure relief valve is individually adjustable. This is in contrast to the pump units in the prior art, where the relief valves are integrated in a housing of the pump unit.

For example, in the case of the injectors being SIP injectors, configured for Swirl Injection Principle into an engine cylinder with ejection of a mist of oil at a pressure in the range of 30-40 bars, the predetermined overpressure relief level is above 40 bars, for example over 50 bars, and can even be as high as above 100 bars, optionally up to 120 or 140 bars.

The downstream sides of all overpressure relief valves are connected to a common overpressure detection device, wherein the overpressure detection device is configured for giving an electrical signal, optionally used as alarm signal, when a pressure in any one of the plurality of lubricant supply lines exceeds the predetermined overpressure relief level. Thus, only one overpressure detection device is used for the plurality of injectors.

For technical flexibility with respect to the pumping unit, the overpressure relief valves are provided remotely from the lubricant pump unit and are communicating only by pipes via the lubricant supply lines to the lubricant pump unit. This is in contrast to the aforementioned Lubtronic system, in which safety valves and pump are integrated in a pump unit within a pressure-safe housing.

For example, the overpressure detection device comprises a pressure sensor. Optionally, the pressure sensor is a pressure switch configured for sensing pressure at the downstream sides of the overpressure relief valves and providing an electrical signal, when the pressure at the downstream sides of the overpressure relief valves is above a predetermined level. Alternatively, the pressure sensor is a pressure transducer configured for measuring pressure at the downstream sides of the overpressure relief valves and for providing an electrical signal proportional to the measured pressure for indicating the pressure at the downstream sides of the overpressure relief valves is above a predetermined level.

Instead of measuring the pressure directly, a flow sensor can be used with an upstream side connected to the downstream side of the overpressure relief valves for receiving lubricant from anyone of the overpressure relief valves. Optionally, the flow sensor is a flow transducer, configured for providing an electrical signal proportional to the flow through the flow transducer for indicating an opened overpressure relief valve by measuring a flow of lubricant above a predetermined flow level.

Such measures are advantageous in that it implies low production costs and ease of installation and operation. With reference to the initial discussion, this is an advantage over the prior art. Furthermore, such system is reliable and stable in operation and typically more precise than the prior art with the magnetically measured member when displaced by overpressure induced flow.

For further simplicity, it is advantageous, although not strictly necessary, if the overpressure detection device comprises only a single pressure sensor or a single flow transducer. In this case, especially, it minimizes cost for production and work load for installation and maintenance. A further advantage is ease of control and operation.

In some embodiments, an injector unit is provided for each injector, the injector unit comprising a housing containing only one of the plurality of injectors and the correspondingly connected overpressure relief valve but not the overpressure detection device. The overpressure detection device is then in flow-communication with the downstream sides of all overpressure relief valves in the injector units. Thus, also in this case, only one overpressure detection device is necessary for the plurality of injectors.

In some embodiments, the overpressure detection device comprises a throttle and the pressure sensor connected to each other through a connection line which is also in flow-communication with the downstream sides of all overpressure relief valves in order for the lubricant from any particular of the lubricant supply lines to flow to the throttle in case of overpressure in that particular lubricant supply line and a correspondingly open overpressure relief valve for that particular lubricant supply line. The throttle comprises a drain channel for draining lubricant from the connection line through the drain channel. The drain channel is dimensioned to create back pressure in the connection line, which is lower than the overpressure relief level of the pressure relief valves. The pressure sensor is configured for indicating an increase of the back pressure above a first pressure level in the connection line.

For example, the throttle is configured for providing back pressure in dependence on the flow through the drain channel. Typically, the throttle releases large parts of the lubricant fluid from the pipe branches. Optionally, the throughput through the drain channel of the throttle is adjustable.

Optionally, this overpressure detection device comprises a further pressure relief valve connected to the connection line and configured for protecting the pressure sensor against damage by elevated pressure. The further pressure relief valve is configured for opening for flow through the further pressure relief valve when the pressure in the connection line exceeds a second pressure level, which is higher than the first pressure level. This optional further pressure relief valve functions as a safety mechanism for the pressure sensor and for the throttle, as well as for the pipe system.

Typically, the first pressure level is substantially lower than the relief level of the overpressure relief valves, for example at least 5 times lower or at least an order of magnitude lower. Optionally, the first pressure level is at least an order of magnitude lower than the overpressure relief level of the overpressure relief valves.

In another embodiment, the overpressure detection device comprises a pressure sensor connected to a connection line which is in flow-communication with the downstream sides of all overpressure relief valves for the pressure sensor to sense the pressure in the connection line. The connection line is further connected to each lubricant supply line through one of a corresponding plurality of distribution valves. Overpressure in any particular lubricant supply line causes flow of lubricant through the corresponding overpressure relief valve into the connection line and from the connection line through the distribution valves into all of the remaining lubricant supply lines that have a pressure below the predetermined overpressure relief level. This embodiment does not require a throttle or other form or drain from the overpressure detection device, as only pressure is necessary to measure, whereas the drain is performed through the other proper functioning injectors. An advantage is that the volume of lubricant which does not flow through a defect injector is distributed to the other, functioning injectors, which maintains the total amount of lubricant for the cylinder.

As it appears from the foregoing, the following generalised principles have been applied in the lubrication system. The hydraulic system comprises a plurality of hydraulic supplies, a corresponding plurality of hydraulic loads, and a corresponding plurality of pipes, where each one of the plurality of pipes is connecting only one of the plurality of hydraulic supplies with only one of the plurality of hydraulic loads. A pipe branch extends from each pipe and is connected to a common overpressure detection device. In addition, each pipe branch comprises an overpressure relief valve having a pressure relief level for opening the overpressure relief valve when the pressure in the corresponding pipe branch exceeds the pressure relief level.

The following generalised principles apply for the specific example of the overpressure detection device that comprises a throttle, a pressure sensor, for example a pressure switch or a pressure transducer, and optionally a further pressure relief valve, which are connected to each other through a connection line which is also in communication with the pipe branches in order for the hydraulic liquid from the pipe branches to flow to the throttle. The throttle comprises a drain channel for draining hydraulic liquid from the pipe branches and which is dimensioned to create back pressure in the branches. The back pressure is lower than the pressure relief level of the pressure relief valves. The pressure sensor gets activated when the pressure in the connection line exceeds a first pressure level and gives a signal, for example an alarm signal, when activated. The optional further pressure relief valve opens for flow through the further pressure relief valve when the pressure in the connection line exceeds a second pressure level, which is higher than the first pressure level. In operation, when the pressure in one of the pipes rises to above the pressure relief level of the corresponding overpressure relief valve, this opens and releases pressure through the pipe branch to the throttle, which drains over-pressurized hydraulic liquid. However, as the throttle has a capacity of flow less than what can be delivered from the hydraulic supply into the branch pipe, a back pressure is built up upstream of the throttle, for example in dependence on the actual, and potentially adjustable, flow through the throttle. This back pressure is measured by the pressure sensor, which is connected to an upstream side of the throttle through a connection line. Accordingly, the pressure sensor gives a signal, for example an alarm signal, if the back pressure is above a pre-set first pressure level. In this generalised case, for the event that the back pressure rises above a second pressure level, higher than the first pressure level, the further pressure relief valve opens for further relief of hydraulic liquid. This optional further pressure relief valve functions as a safety mechanism for the pressure sensor and for the throttle, as well as for the pipe system. For example, the throttle comprises a channel with an adjustable throughput of hydraulic liquid through the channel.

Optionally, the overpressure relief level of the overpressure relief valves is adjustable. In some embodiment, the overpressure relief level is adjustable for all valves at the same time and to the same level. Alternatively, the overpressure relief level is adjustable individually for each overpressure relief valve. The latter allows adjustment of the protective pressure level for each load specifically. This is useful in case that the loads, especially lubricant injectors in the above embodiments, are working with different pressures or have different stability against oil pressure. An advantage of the detection device is the possibility of a gradual adjustment of pressure parameters, optionally in combination with flow parameters, necessary for causing an alarm by the pressure sensor.

### SHORT DESCRIPTION OF THE DRAWINGS

The invention will be explained in more detail with reference to the drawing, where
FIG. 1 illustrates a cylinder lubrication system in a large slow-running two-stroke engine;
FIG. 2 is a principle diagram of a system for overpressure safety control;
FIG. 3 illustrates an example of an oil lubrication system with an overpressure safety control system as in FIG. 2;
FIG. 4 illustrates an alternative overpressure safety control system in which overpressure valves are incorporated in injector units;
FIG. 5 illustrates an embodiment with a flow sensor;
FIG. 6 illustrates an embodiment with redistribution of lubricant to the functioning injectors.

### DETAILED DESCRIPTION / PREFERRED EMBODIMENT

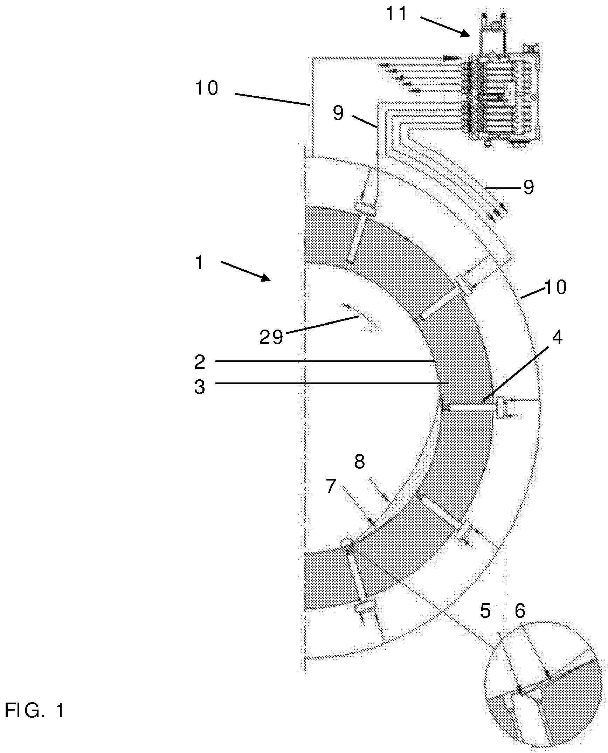

FIG. 1 illustrates one half of a cylinder of a large slow-running two-stroke engine, for example diesel engine or an engine using LNG fuel. The cylinder comprises a cylinder liner 2 on the inner side of the cylinder wall 3. Inside the cylinder wall 3, there are provided a plurality of lubrication oil injectors 4 distributed along a circle with the same angular distance between adjacent injectors 4. The injectors 4 receive lubrication oil from a lubricator pump unit 11 through lubrication supply lines 9. Some of the lubrication is returned to the pump by a lubrication return line 10. The lubricator pump unit 11 supplies pressurised lubrication oil to the injectors 4 in precisely timed pulses, synchronised with the piston motion in the cylinder 1 of the engine. For the synchronisation, the lubricant pump unit 11 is electronically connected to a computer that monitors parameters for the actual state and motion of the engine, including speed, load, and position of the crankshaft, as the latter reveals the position of the pistons in the cylinders.

Each of the injectors 4 has a nozzle 5 from which a spray of small droplets 7 is ejected under high pressure into the cylinder. The swirl 29 of the scavenging air in the cylinder 1 presses the spray 8 against the cylinder liner 2 such that an even distribution of lubrication oil on the cylinder liner 2 is achieved. This lubrication system is known in the field as Swirl Injection Principle, SIP. As alternatives, other lubricant injector principles are possible, for example injectors that have jets directed towards the cylinder liner. Optionally, the cylinder liner 2 is provided with free cuts 6 for providing adequate space for the spray or jet from the injector 4. SIP valve oil injection systems are described in International patent applications WO02/35068, WO2004/038189, WO2005/124112, WO2012/126480, WO2014/048438, and WO2012/126473, all by Hans Jensen Lubricators A/S.

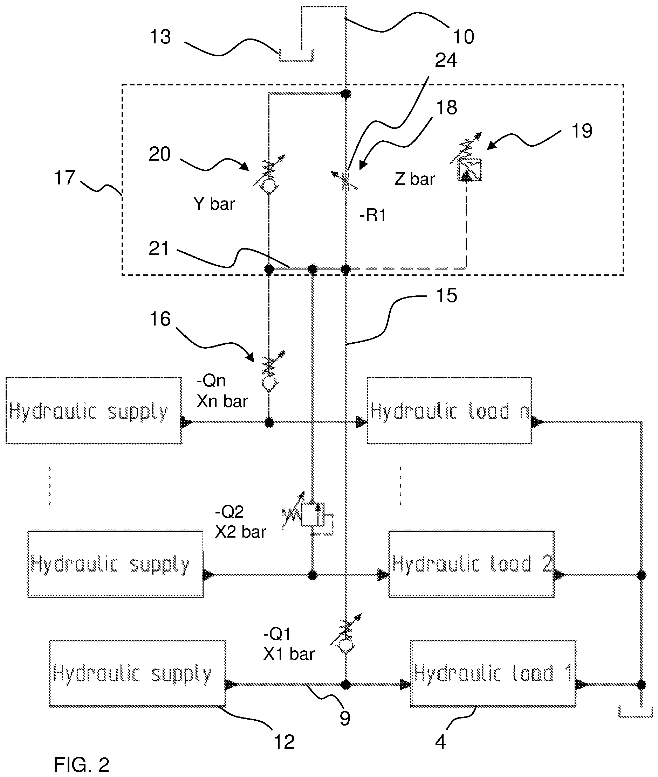

FIG. 2 is a principle diagram of an improved hydraulic system with an overpressure safety control mechanism which for some embodiments is employed in the engine lubrication system of FIG. 1. The hydraulic system comprises a plurality of n hydraulic supplies 12. The plurality of hydraulic supplies 12 is potentially a plurality hydraulic pumps or a plurality of hydraulic output valves, optionally hydraulically fed from a common hydraulic pump unit. In a practical embodiment, the hydraulic supplies 12 are provided as a common manifold 12 connected to a pump unit 11, for example a pump unit as illustrate in FIG.1. Each hydraulic supply 12 is connected via a pipe 9 to a hydraulic load 4, similarly to the lubricant supply lines 9 and the oil injectors 4 in the internal combustion engine as described in connection with FIG. 1.

A branch 15, for example a pipe, extends from each pipe 9 and comprises an adjustable overpressure relief valve 16, in the drawing denoted Q1 for the first branch, Q2 for the second branch and Qn for the n'th branch. The first pressure relief valve Q1 is adjusted to X1 pressure units overpressure relief level at which the valve opens for flow through the first pressure relief valve Q1. Correspondingly, the second pressure relief valve Q2 and n'th relief valve Qn are adjusted to X2 pressure units and Xn pressure units, respectively.

The n branches 15 are connected commonly to a detection device 17 via a common connection line 21, typically a connection pipe 21, although in some instances also a manifold can be used instead of a connection pipe 21. The detection device 17 comprises a throttle 18, a pressure sensor 19, typically a pressure switch or pressure transducer, and a further pressure relief valve 20. The throttle 18 is adjusted to give a resistance R1 to the flow through the throttle 18, thereby creating some back pressure PI in the branches 15 and in the connection line 21 between the throttle 18 and the pressure sensor 19. The pressure sensor 19 is activated when the back pressure PI upstream of the pressure sensor 19 exceeds Z bar and gives an alarm signal when activated. The further pressure relief valve 20 is opening for flow through the further pressure relief valve 20 when the backpressure exceeds Y pressure units.

Depending on the capacity of throttle 18, no back pressure is created for small flows through throttle 18, thus, allowing some leakage flows through pressure relief valves 16. Also, in case that an overpressure causing fault has been repaired for a hydraulic load 4', and the corresponding overpressure relief valve 16 closed again, the pressure upstream of the throttle 18 would be reduced again by flow through the throttle 18, and the detection device 17 returns to idle status without alarm given by the pressure switch 19.

For the n branches 15, the maximum pressure at peak is limited to Y pressure units, as the further pressure relief valve 20 opens at Y pressure units. The level Z of the pressure sensor 19 is lower than the level Y of the further pressure relief valve 20. Due to the maximum backpressure of Y pressure unit in the branches 15 on the downstream side of the pressure relief valves 16, the max pressure in the pipe 9 upstream of pressure relief valve Qi is Xi+Y pressure units, as the pressure relief valve 16 opens when the pressure difference between the pipe 9 and the branch 15 exceeds the pressure relief level Xi, i=(1,2,...,n).

As illustrated in FIG. 2, the flow through throttle 18 continues through drain line 10 and into a sump 13. However, as we will see in a concrete embodiment below, the drain line 10 is alternatively a hydraulic return line back to the pump for circulation back into the hydraulic supply 12.

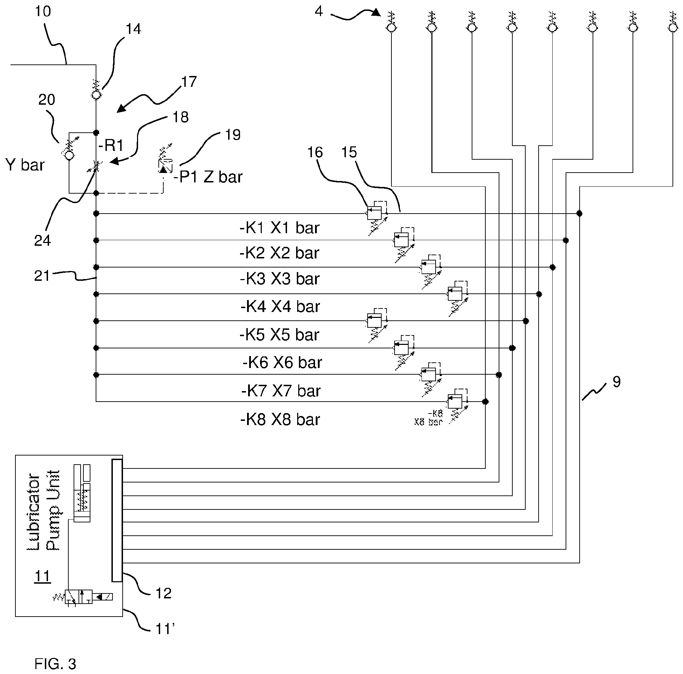

In FIG. 3 the system of the principle diagram of Fig. 1 is transferred to a practical example of oil injectors 4 for a large slow-running two-stroke engine, for example similar to the large slow-running two-stroke marine engine illustrated in FIG. 1. For example, the oil injectors 4 are of the SIP type as discussed initially.

Through a manifold 12, which constitutes the hydraulic supply, lubrication oil is supplied from a high pressure lubricant pump unit 11 to a plurality of lubricant supply lines 9, similarly to the supply pipes 9 described in connection with FIG. 1. From each lubricant supply line 9, a branch 15, for example a branch pipe 15, extends through an overpressure relief valve 16. In the shown embodiment, as an example and not limiting the invention, all pressure relief valves 16, denoted K1 through K8, are adjusted to 120 bars (1 bar = 100 kPa). Also, the pressure levels need not be the same for all pressure relief valves 16 but can be adjusted to various different pressure levels. For example, the pump unit 11 comprises a housing 11' from which the lubricant supply lines 9 extend as pipes that are connected to the pump housing 11'. The branches 15 are, thus, flow-connected to the supply lines 9, for example by T-pieces mounted to the supply lines 9. Instead of the pressure switch 19, a different type of sensor can be used, for example a pressure transducer.

A detection device 17 is provided similar to FIG. 2 and as explained above. In the illustrated case, the pressor sensor 19 is a pressure switch which gives an electrical signal when the pressure at the pressure switch 19 exceeds a predetermined level. As an example and not limiting the invention, the pressure level of the further overpressure relief valve 16 is set to 8 bars, and the pressure level of the pressure switch 19 is set to 4 bars, thus, lower than the level of 120 bars of the further overpressure relief valve 16. This is due to the fact that the pressure switch 19 should be activated at relatively low back pressure, while the further overpressure relief valve 16 has the function of a protection mechanism for preventing damage to the pressure switch 19.

The detection device 17 in FIG. 3 comprises in addition a non-return valve 14 connected to a drain line or return line 10 for preventing oil from the drain or return line 10 to enter the detection device 17. For example, the return line 10 returns oil from the oil injectors 4 to the pump unit 11. The pressure difference level between the return line 10 and the detection device 17 is set to a predetermined pressure, for example a low pressure of 1 bar.

For example, the throttle 18 comprises a drain channel 24 that is formed by a diaphragm. As non-limiting example, the cross section of the throttle is 0.3 mm. However, the drain channel size of the throttle, for example diameter, can be variable and depends not only on the system specifications, such as pressure and flow, but also on the viscosity of the oil.

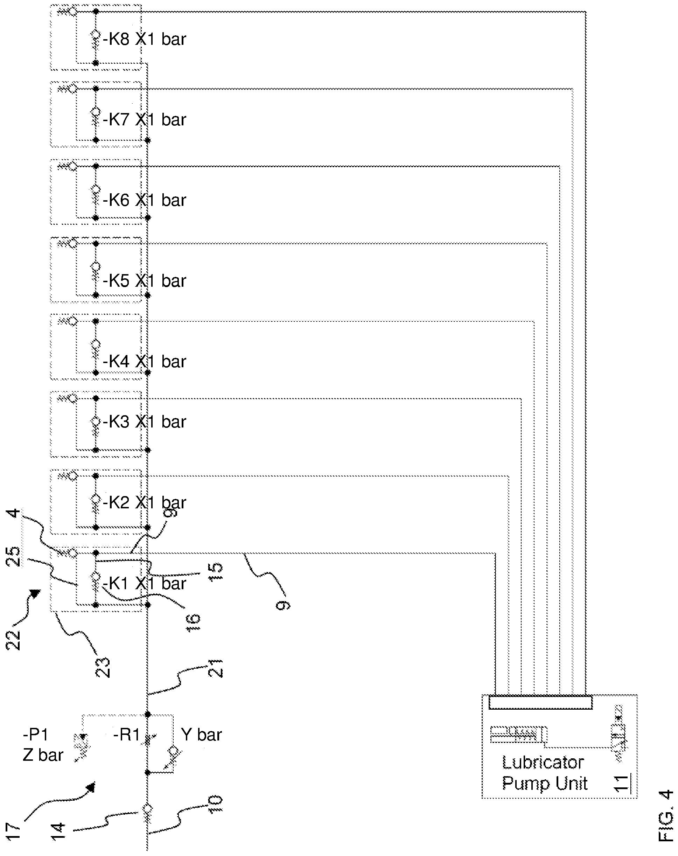

FIG. 4 is an alternative embodiment relatively to the embodiment in FIG. 3, in which the oil injectors 4, for example SIP injectors, and the overpressure relief valves 16 are integrated into an injector unit 22. The injector unit 22 comprises an injector housing 23 containing the oil injector 4, the relief valve 16 as well as an oil return 25 that is connected to the connection line 21, which through detection device 17 communicates with the lubricant return line 10, which is common for all injector units 22. The supply line 9 extends partly as a pipe from the pumping unit 11 to the injector unit 22 and continues as a channel 9' inside the injector housing 23 to the injector 4, while the branch 15 branches of the channel 9' inside the housing 23. Typically, in such case, the branch 15 is not a pipe but a canal inside the housing

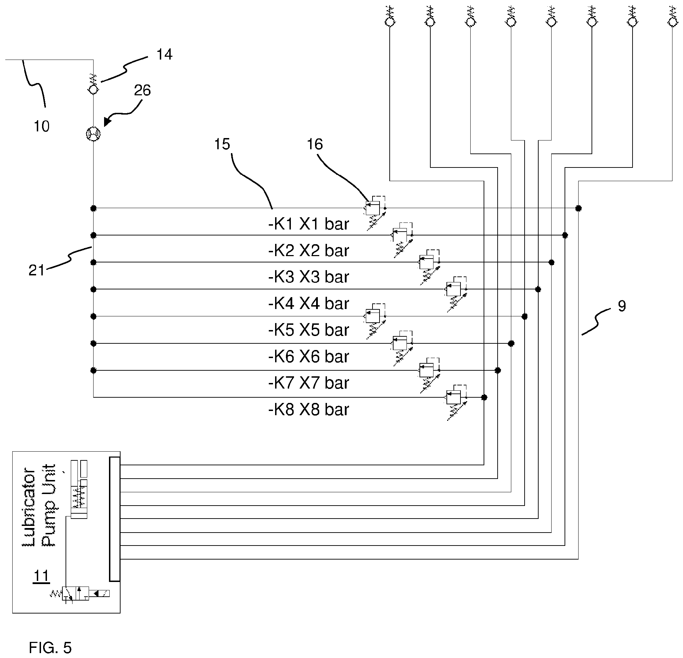

FIG. 5 illustrates a further embodiment in which the detection device of FIG. 3 has been substituted by a flow sensor 26. The flow sensor 26 is configured to provide a signal dependent on the flow through the flow detector 26. For example, if the flow is above a threshold, an alarm signal is given by the sensor for the increased pressure in line 9 that caused opening of one of the pressure relief valves 16, which in turn indicates malfunctioning of one of the injectors 4. Alternatively, the flow sensor 26 provides a signal that is proportional to the flow through the flow sensor 26. In this case, an alarm is triggered if the flow is above a set signal level. The alarm may be triggered by the flow sensor itself or the signal from the flow sensor is provided to an electronic controller which yields an alarm in case of malfunctioning and overpressure in a supply line 9. For example, the flow detector an oval gear meter in which oval sprocket wheels are driven by the lubricant flow. It is pointed out that this detection embodiment in FIG. 5 also can be combined with the principles of the injector units 22 of FIG. 4.

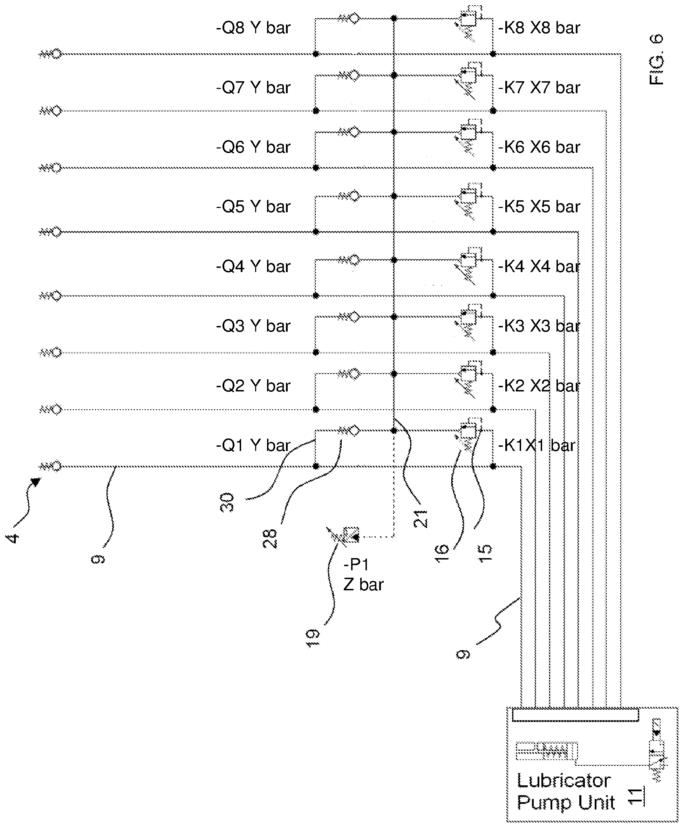

FIG. 6 illustrates a further modification of the embodiment of FIG. 3. In this case, the detection device of FIG. 3 is substituted merely by a pressure sensor 19 or, typically a pressure switch or pressure transducer. The pressure sensor 19 gives a signal, for example an alarm signal in case of the pressure sensor being a pressure switch, in case of pressure rise in the connection line 21 to which the pressure relief valves 16 are commonly connected upstream of the pressure sensor 19. In contrast to FIG. 3 the lubricant from the connection line 21 is not drained through a common drain line 10 but is for each lubricant supply line 9 redistributed through a redistribution valves 28 and a serially connected redistribution lines 30 back to one lubricant supply line 9 of the other injectors 4. The redistribution valves 28, for example one way pressure valves, have an opening pressure of Y bar, which is optionally adjustable.

In case that an oil injector 4 is defect and does not inject lubricant any more into the cylinder of the engine, pressure will built up in lubricant supply line 9 in excess of the predetermined relief pressure level in the pressure relief valve 16. The corresponding pressure relief valve 16 in the branch 15 will open and cause a corresponding pressure increase in the connection line 21 to which all branches 15 are connected. The high pressure in the connection line 21 causes an alarm signal in the pressure switch 19. However, meanwhile, the lubricant that is pumped into the connection line 21 is released through the redistribution valves 28 and the redistribution lines 29 into the lubricant supply line 9. Thus, when one of the injectors 4 fails, the total amount of lubricant intended to be injected into the cylinder by the 8 injectors 4 is largely kept and merely redistributed to the remaining lubricant supply lines 9 and injected into the cylinder through the corresponding 7 injectors. Once a defect injector 4 has been repaired or substituted, the high pressure is released from the connection line 21, and the pressure sensor 19 not triggered any more.

The advantage of the redistribution principle of FIG. 6 is a minimization of additional engine wear caused by the failure of a single injector 4, or potentially even by failure of two injectors, although simultaneous failure by two injectors is very rare.

As a parametric example, the lubricant injectors have an injection pressure of 37 bars. For a opening pressure of Y=20 bars in the redistribution valves 28, the maximum pressure in the connection line 21 is limited to 57 bars As an example, the indicator pressure level of the pressure sensor 19, for example pressure switch 19, is adjusted to 50 bars and would give a signal if one or more of the injectors 4 are blocked. Advantageously, the pressure sensor 19 advantageously is provided with an alarm level of more than the injection pressure of 37 bars, as leakages could cause a pressure of up to 37 bars in the connection line 21 but not more due to the injection pressure of 37 bars.

Although, the drawings all show a plurality of 8 injectors, which is a typical number, this number of injectors is only illustrated by way of example and can be different. For example, there can be provided 2, 3, 4, 5, 6, 7, 8, 9, 10, 11 or 12 or even more lubricant injectors per cylinder of the engine.

### Reference numbers

1 cylinder
2 cylinder liner
3 cylinder wall
4 oil injector
4' hydraulic load
5 nozzle
6 free cut in liner
7 spray droplets
8 spray from a single injector
9 lubricant supply lines
9' lubricant supply channel inside injector housing 23
10 oil drain or return line
11 lubricator pump and controller system
12 hydraulic supplies
12' hydraulic manifold
13 sump
14 additional non-return valve to return line 10
15 branch
16 overpressure relief valve
17 detection device
18 throttle in detection device 17
19 pressure switch in detection device 7
20 further pressure relief valve in detection device 7
21 connection line
22 injector unit
23 housing of injector unit 22
24 drain channel in throttle 18
25 oil return in injector unit 22
26 flow meter
27 collection branch
28 redistribution valve
29 swirl of scavenging air in cylinder 1
30 redistribution lines

## Claims

1. A system for lubrication of the cylinder (1) of a large slow-running internal combustion engine, the lubrication system comprising a plurality of lubricant injectors (4) of which each one is connected via one of a corresponding plurality of lubricant supply lines (9) to a lubricant pump unit (11), wherein the injectors (4) have an injection pressure level at which the injectors (4) are activated for ejecting lubricant; wherein each of the plurality of lubricant supply lines (9) is connected to an upstream side of one of a corresponding plurality of overpressure relief valves (16) for opening the overpressure relief valve (16) when the pressure in the corresponding lubricant supply line (9) exceeds a predetermined overpressure relief level which is above the injection pressure level; wherein the downstream sides of all overpressure relief valves (16) are connected to a common overpressure detection device (17, 19, 26), wherein the overpressure detection device (17, 19, 26) is configured for giving a signal when a pressure in any one of the plurality of lubricant supply lines (9) exceeds the predetermined overpressure relief level, **characterised in that** the overpressure relief valves (16) are provided remotely from the lubricant pump unit (11) and are communicating only by pipes (9, 15) via the lubricant supply lines (9) to the lubricant pump unit (11).

2. A system according to claim 1, wherein the overpressure detection device (17, 19) comprises
- a pressure sensor (19) which is a pressure switch configured for sensing pressure at the downstream sides of the overpressure relief valves (16) and providing a signal when the pressure at the downstream sides of the overpressure relief valves (16) is above a predetermined level, or
- a pressure sensor (19) which is a pressure transducer configured for measuring pressure at the downstream sides of the overpressure relief valves (16) and for providing a signal proportional to the measured pressure for indicating the pressure at the downstream sides of the overpressure relief valves (16) is above a predetermined level;
- a flow transducer (26) with an upstream side connected to the downstream side of the overpressure relief valves (16) for receiving lubricant from anyone of the overpressure relief valves (16), and configured for providing a signal proportional to the flow through the flow transducer (26) for indicating an opened overpressure relief valve (16) by measuring a flow of lubricant above a predetermined flow level.

3. A system according to claim 1 or 2, wherein the injectors (4) are configured for Swirl Injection Principle into an engine cylinder (1) with ejection of a mist of oil at a pressure above 10 bars.

4. A system according to any preceding claim wherein an injector unit (22) is provided for each injector (4), the injector unit (22) comprising a housing (23) containing only one of the plurality of injectors (4) and the correspondingly connected overpressure relief valve (16) but not the overpressure detection device (17, 19, 26), wherein the overpressure detection device (17, 19, 26) is in flow-communication with the downstream sides of all overpressure relief valves (16) in the injector units (23).

5. A system according to any preceding claim, wherein the overpressure detection device (17) comprises a throttle (18) and the pressure sensor (19), connected to each other through a connection line (21) which is also in flow-communication with the downstream sides of all overpressure relief valves (16) in order for the lubricant from any particular of the lubricant supply lines (9) to flow to the throttle (18) in case of overpressure in that particular lubricant supply line (9) and a correspondingly open overpressure relief valve (16) for that particular lubricant supply line (9); wherein the throttle (18) comprises a drain channel (24) for draining lubricant from the connection line (21) through the drain channel (24), the drain channel (24) being dimensioned to create back pressure in the connection line (21), the back pressure being lower than the overpressure relief level of the pressure relief valves (16); wherein the pressure sensor (19) is configured for indicating an increase of the back pressure above a first pressure level in the connection line (21).

6. A system according to claim 5, wherein the overpressure detection device (17) comprises a further pressure relief valve (20) connected to the a connection line (21) and configured for protecting the pressure sensor (19) against damage by elevated pressure, wherein the further pressure relief valve (20) is configured for opening for flow through the further pressure relief valve (20) when the pressure in the connection line (21) exceeds a second pressure level, which is higher than the first pressure level.

7. A system according to claim 5 or 6, wherein the throttle (18) is configured for providing back pressure in dependence on the flow through the channel (24).

8. A system according to any one of the claims 5-7, wherein a throughput through the channel (24) of the throttle (18) is adjustable

9. A system according to any one of the claims 5-8, wherein the first pressure level is at least an order of magnitude lower than the overpressure relief level of the overpressure relief valves.

10. A system according to any preceding claim, wherein the overpressure relief level of each overpressure relief valve (16) is individually adjustable.

11. A system according to anyone of the claims 1-3, wherein the overpressure detection device comprises a pressure sensor (19) connected to a connection line (21) which is in flow-communication with the downstream sides of all overpressure relief valves (16) for the pressure sensor (19) to sense the pressure in the connection line (21); wherein the connection line (21) is further connected to each lubricant supply line (9) through one of a corresponding plurality of distribution valves (28) for flow of lubricant from any particular of the plurality of lubricant supply lines (9), in case of overpressure in the particular lubricant supply line (9), through the corresponding overpressure relief valve (16) into the connection line (21) and from the connection line (21) through the distribution valves (28) into all of the remaining lubricant supply lines (9) that have a pressure below the predetermined overpressure relief level.

12. A system according to any preceding claim, wherein the overpressure detection device (17, 19, 26) comprises only a single pressure sensor (19) or a single flow transducer (26).

13. A large slow-running two-stroke internal combustion engine comprising a system according to any preceding claim.

14. An engine according to claim 13, wherein the engine is a marine engine using diesel or liquefied natural gas.

## Patentansprüche

1. System zur Schmierung des Zylinders (1) eines großen langsam laufenden Verbrennungsmotors, wobei das Schmiersystem eine Vielzahl von Schmiermittelinjektoren (4) aufweist, die jeweils über eine entsprechende Vielzahl von Schmiermittelzuleitungen (9) mit einer Schmiermittelpumpeinheit (11) verbunden sind, wobei die Injektoren (4) ein Einspritzdruckniveau aufweisen, bei dem die Injektoren (4) für das Aussondern von Schmiermittel aktiviert werden; wobei jede der Schmiermittelzuleitungen (9) mit einer vorgelagerten Seite von jedem einer entsprechenden Vielzahl von Überdruckventilen (16) zum Öffnen des Überdruckventils (16) verbunden ist, wenn der Druck in der entsprechenden Schmiermittelzuleitung (9) ein vorgegebenes Überdruckniveau überschreitet, das über dem Einspritzdruckniveau liegt; wobei die nachgelagerten Seiten aller Überdruckventile (16) mit einer Überdruckerkennungsvorrichtung (17, 19, 26) verbunden sind, wobei die Überdruckerkennungsvorrichtung (17, 19, 26) so konfiguriert ist, dass sie ein Signal bereitstellt, wenn ein Druck in einer der Vielzahl von Schmiermittelzuleitungen (9) das vorgegebene Überdruckniveau überschreitet, **dadurch gekennzeichnet, dass** die Überdruckventile (16) von der Schmiermittelpumpeinheit (11) entfernt bereitgestellt sind und nur durch Leitungen (9, 15) über die Schmiermittelzuleitungen (9) mit der Schmiermittelpumpeinheit (11) verbunden sind.

2. System nach Anspruch 1, wobei die Überdruckerkennungsvorrichtung (17, 19) Folgendes umfasst
- einen Drucksensor (19), der ein Druckschalter ist, der so konfiguriert ist, dass er Druck an den nachgelagerten Seiten der Überdruckventile (16) wahrnimmt und ein Signal bereitstellt, wenn der Druck an den nachgelagerten Seiten der Überdruckventile (16) über einem vorgegebenen Niveau liegt, oder
- einen Drucksensor (19), der ein Druckwandler ist, der so konfiguriert ist, dass er den Druck an den nachgelagerten Seiten der Überdruckventile (16) misst und ein Signal bereitstellt, das dem gemessenen Druck entspricht, um anzuzeigen, dass der Druck an den nachgelagerten Seiten der Überdruckventile (16) über einem vorgegebenen Niveau liegt;
- einen Durchflussgeber (26), bei dem eine vorgelagerte Seite mit der nachgelagerten Seite der Überdruckventile (16) verbunden ist, um Schmiermittel von einem der Überdruckventile (16) zu erhalten, und so konfiguriert, dass ein Signal bereitgestellt wird, das dem Fluss durch den Durchflussgeber (26) entspricht, um ein geöffnetes Überdruckventil (16) durch das Messen eines Schmiermittelflusses über einem vorgegebenen niedrigen Niveau anzuzeigen.

3. System nach Anspruch 1 oder 2, wobei die Injektoren (4) zum Swirl Injection Principle in einem Motorzylinder (1) mit Abgabe eines Ölnebels bei einem Druck über 10 bar konfiguriert sind.

4. System nach einem der vorhergehenden Ansprüche, wobei eine Injektoreinheit (22) für jeden Injektor (4) bereitgestellt wird, wobei die Injektoreinheit (22) ein Gehäuse (23) umfasst, das nur einen der Vielzahl von Injektoren (4) enthält, und das entsprechend verbundene Überdruckventil (16), jedoch nicht die Überdruckerkennungsvorrichtung (17, 19, 26), wobei die Überdruckerkennungsvorrichtung (17, 19, 26) mit den nachgelagerten Seiten aller Überdruckventile (16) in den Injektoreinheiten (23) in Flussverbindung steht.

5. System nach einem der vorhergehenden Ansprüche, wobei die Überdruckerkennungsvorrichtung (17) eine Drossel (18) und den Drucksensor (19) umfasst, die über eine Verbindungsleitung (21) miteinander verbunden sind, die ebenfalls mit den nachgelagerten Seiten aller Überdruckventile (16) in Flussverbindung steht, damit das Schmiermittel aus einer bestimmten der Schmiermittelzuleitungen (9) im Falle eines Überdrucks in dieser bestimmten Schmiermittelzuleitung (9) an die Drossel (18) fließt, und ein entsprechend geöffnetes Überdruckventil (16) für diese bestimmte Schmiermittelzuleitung (9); wobei die Drossel (18) einen Abflusskanal (24) für das Abfließen des Schmiermittels aus der Verbindungsleitung (21) durch den Abflusskanal (24) umfasst, wobei der Abflusskanal (24) so dimensioniert ist, dass er in der Verbindungsleitung (21) Gegendruck erzeugt, wobei der Gegendruck niedriger ist als das Überdruckniveau der Überdruckventile (16); wobei der Drucksensor (19) so konfiguriert ist, dass er eine Steigerung des Gegendrucks über ein erstes Druckniveau in der Verbindungsleitung (21) hinaus anzeigt.

6. System nach Anspruch 5, wobei die Überdruckerkennungsvorrichtung (17) ein weiteres Druckventil (20) umfasst, das mit der Verbindungsleitung (21) verbunden ist und so konfiguriert ist, dass es den Drucksensor (19) gegen Schäden durch erhöhten Druck schützt, wobei das weitere Druckventil (20) so konfiguriert ist, dass es für den Fluss durch das weitere Druckventil (20) geöffnet wird, wenn der Druck in der Verbindungsleitung (21) ein zweites Druckniveau überschreitet, das höher ist als das erste Druckniveau.

7. System nach Anspruch 5 oder 6, wobei die Drossel (18) so konfiguriert ist, dass sie abhängig vom Fluss durch den Kanal (24) Gegendruck erzeugt.

8. System nach einem der Ansprüche 5-7, wobei ein Durchfluss durch den Kanal (24) der Drossel (18) einstellbar ist.

9. System nach einem der Ansprüche 5-8, wobei das erste Druckniveau mindestes eine Größenordnung unter dem Überdruckniveau der Überdruckventile liegt.

10. System nach einem der vorhergehenden Ansprüche, wobei das Überdruckniveau jedes Überdruckventils (16) individuell einstellbar ist.

11. System nach einem der Ansprüche 1-3, wobei die Überdruckerkennungsvorrichtung einen Drucksensor (19) umfasst, der mit einer Verbindungsleitung (21) verbunden ist, die mit den nachgelagerten Seiten aller Überdruckventile (16) in Flussverbindung steht, damit der Drucksensor (19) den Druck in der Verbindungsleitung (21) erkennt; wobei die Verbindungsleitung (21) ferner mit jeder Schmiermittelzuleitung (9) durch eines einer entsprechenden Vielzahl von Verteilerventilen (28) verbunden ist, damit das Schmiermittel, falls es zu Überdruck in der bestimmten Schmiermittelzuleitung (9) kommt, von einer bestimmten der Vielzahl von Schmiermittelzuleitungen (9) durch die das entsprechende Überdruckventil (16) in die Verbindungsleitung (21) und von der Verbindungsleitung (21) durch die Verteilerventile (28) in alle übrigen Schmiermittelzuleitungen (9) fließen kann, die einen Druck unterhalb des vorgegebenen Überdruckniveaus aufweisen.

12. System nach einem der vorhergehenden Ansprüche, wobei die Überdruckerkennungsvorrichtung (17, 19, 26) nur einen einzelnen Drucksensor (19) oder einen einzelnen Durchflussgeber (26) umfasst.

13. Großer langsam laufender Zweitaktverbrennungsmotor, der ein System nach einem der vorhergehenden Ansprüche umfasst.

14. Motor nach Anspruch 13, wobei der Motor ein mit Diesel oder Flüssigerdgas betriebener Schiffsmotor ist.

## Revendications

1. Système de lubrification du cylindre (1) d'un grand moteur à combustion interne à marche ralenti, le système de lubrification comprenant une pluralité d'injecteurs de lubrifiant (4) dont chacun est relié via l'une d'une pluralité correspondante de conduites d'alimentation en lubrifiant (9) à une unité de pompe à lubrifiant (11), dans lequel les injecteurs (4) ont un niveau de pression d'injection auquel les injecteurs (4) sont activés pour éjecter du lubrifiant ; dans lequel chacune de la pluralité de conduites d'alimentation en lubrifiant (9) est reliée à un côté amont de l'une d'une pluralité correspondante de soupapes de protection contre les surpressions (16) pour ouvrir la soupape de protection contre les surpressions (16) lorsque la pression dans la conduite d'alimentation en lubrifiant (9) correspondante dépasse un niveau de protection contre les surpressions prédéterminé qui est supérieur au niveau de pression d'injection ; dans lequel les côtés aval de toutes les soupapes de protection contre les surpressions (16) sont reliés à un dispositif de détection des surpressions commun (17, 19, 26), dans lequel le dispositif de détection des surpressions (17, 19, 26) est configuré pour produire un signal lorsqu'une pression dans l'une quelconque de la pluralité de conduites d'alimentation en lubrifiant (9) dépasse le niveau de protection contre les surpressions prédéterminé, **caractérisé en ce que** les soupapes de protection contre les surpressions (16) sont prévues à distance de l'unité de pompe à lubrifiant (11) et ne communiquent que par des tuyaux (9, 15) via les conduites d'alimentation en lubrifiant (9) jusqu'à l'unité de pompe à lubrifiant (11).

2. Système selon la revendication 1, dans lequel le dispositif de détection des surpressions (17, 19) comprend
- un capteur de pression (19) qui est un pressostat configuré pour détecter la pression au niveau des côtés aval des soupapes de protection contre les surpressions (16) et fournir un signal lorsque la pression au niveau des soupapes de protection contre les surpressions (16) est supérieure à un niveau prédéterminé, ou
- un capteur de pression (19) qui est un transducteur de pression configuré pour mesurer la pression au niveau des côtés aval des soupapes de protection contre les surpressions (16) et pour fournir un signal proportionnel à la pression mesurée pour indiquer que la pression au niveau des côtés aval des soupapes de protection contre les surpressions (16) est supérieure à un niveau prédéterminé ;
- un transducteur d'écoulement (26) avec un côté amont relié au côté aval des soupapes de protection contre les surpressions (16) pour recevoir du lubrifiant depuis n'importe laquelle des soupapes de protection contre les surpressions (16), et configuré pour fournir un signal proportionnel à l'écoulement à travers le transducteur d'écoulement (26) pour indiquer une soupape de protection contre les surpressions (16) ouverte en mesurant un écoulement de lubrifiant au-dessus d'un niveau d'écoulement prédéterminé.

3. Système selon la revendication 1 ou 2, dans lequel les injecteurs (4) sont configurés pour le principe d'injection avec tourbillonnement dans un cylindre de moteur (1) avec éjection d'un brouillard d'huile à une pression supérieure à 10 bar.

4. Système selon une quelconque revendication précédente, dans lequel une unité d'injecteur (22) est prévue pour chaque injecteur (4), l'unité d'injecteur (22) comprenant un boîtier (23) ne contenant qu'un seul de la pluralité d'injecteurs (4) et la soupape de protection contre les surpressions (16) reliée de manière correspondante mais pas le dispositif de détection des surpressions (17, 19, 26), dans lequel le dispositif de détection des surpressions (17, 19, 26) est en communication d'écoulement avec les côtés aval de toutes les soupapes de protection contre les surpressions (16) dans les unités d'injecteur (23).

5. Système selon une quelconque revendication précédente, dans lequel le dispositif de détection des surpressions (17) comprend un papillon (18) et le capteur de pression (19), reliés l'un à l'autre par une conduite de raccordement (21) qui est également en communication d'écoulement avec les côtés aval de toutes les soupapes de protection contre les surpressions (16) afin que le lubrifiant provenant de l'une quelconque des conduites d'alimentation en lubrifiant (9) s'écoule vers le papillon (18) en cas de surpression dans cette conduite d'alimentation en lubrifiant (9) spécifique et une soupape de protection contre les surpressions (16) ouverte de manière correspondante pour cette conduite d'alimentation en lubrifiant (9) spécifique ; dans lequel le papillon (18) comprend un canal de vidange (24) pour vidanger le lubrifiant de la conduite de raccordement (21) à travers le canal de vidange (24), le canal de vidange (24) étant dimensionné pour créer une contre-pression dans la conduite de raccordement (21), la contre-pression étant inférieure au niveau de protection contre les surpressions des soupapes de protection contre les surpressions (16) ; dans lequel le capteur de pression (19) est configuré pour indiquer une augmentation de la contre-pression au-dessus d'un premier niveau de pression dans la conduite de raccordement (21).

6. Système selon la revendication 5, dans lequel le dispositif de détection des surpressions (17) comprend une autre soupape de protection contre les surpressions (20) reliée à la conduite de raccordement (21) et configurée pour protéger le capteur de pression (19) contre des dommages provoqués par une pression élevée, dans lequel l'autre soupape de protection contre les surpressions (20) est configurée pour s'ouvrir pour un écoulement à travers la soupape de protection contre les surpressions (20) lorsque la pression dans la conduite de raccordement (21) dépasse un second niveau de pression, qui est supérieur au premier niveau de pression.

7. Système selon la revendication 5 ou 6, dans lequel le papillon (18) est configuré pour fournir une contre-pression en fonction de l'écoulement à travers le canal (24).

8. Système selon l'une quelconque des revendications 5 à 7, dans lequel un débit à travers le canal (24) du papillon (18) peut être réglé.

9. Système selon l'une quelconque des revendications 5 à 8, dans lequel le premier niveau de pression est au moins inférieur d'un ordre de grandeur au niveau de protection contre les surpressions des soupapes de protection contre les surpressions.

10. Système selon une quelconque revendication précédente, dans lequel le niveau de protection contre les surpressions de chaque soupape de protection contre les surpressions (16) peut être réglé individuellement.

11. Système selon l'une quelconque des revendications 1 à 3, dans lequel le dispositif de détection des surpressions comprend un capteur de pression (19) relié à une conduite de raccordement (21) qui est en communication d'écoulement avec les côtés aval de toutes les soupapes de protection contre les surpressions (16) pour que le capteur de pression (19) détecte la pression dans la conduite de raccordement (21) ; dans lequel la conduite de raccordement (21) est en outre reliée à chaque conduite d'alimentation en lubrifiant (9) à travers l'une d'une pluralité correspondante de soupapes de répartition (28) pour l'écoulement du lubrifiant depuis une quelconque conduite d'alimentation en lubrifiant spécifique parmi la pluralité de conduites d'alimentation en lubrifiant (9), en cas de surpression dans la conduite d'alimentation en lubrifiant (9) spécifique, à travers la soupape de protection contre les surpressions (16) correspondante dans la conduite de raccordement (21) et depuis la conduite de raccordement (21) à travers les soupapes de répartition (28) dans toutes les autres conduites d'alimentation en lubrifiant (9) qui présentent une pression inférieure au niveau de protection contre les surpressions prédéterminé.

12. Système selon une quelconque revendication précédente, dans lequel le dispositif de détection des surpressions (17, 19, 26) ne comprend qu'un seul capteur de pression (19) ou un seul transducteur d'écoulement (26).

13. Grand moteur à combustion interne à deux temps à marche ralenti comprenant un système selon une quelconque revendication précédente.

14. Moteur selon la revendication 13, dans lequel le moteur est un moteur marin utilisant du diesel ou du gaz naturel liquéfié.
